# FASCICULE DE BREVET EUROPEEN

(11) **EP 0 857 447 B1**
(45) Date de publication et mention de la délivrance du brevet: **15.10.2003**
(21) Numéro de dépôt: 98201246.0
(22) Date de dépôt: 24.03.1994
(51) Int. Cl.: A47J 31/44, A47J 31/057

(54) **Machine à boisson chaude à secteurs d'arrosage différenciés**
Brühgerät mit einer Auswahl an Aufgusszonen
Brewing apparatus with selectable dripping zones

(30) Priorité: 24.03.1993 FR 9303634
(43) Date de publication de la demande: 12.08.1998
(62) Demande divisionnaire de: 94420102.9
(73) Titulaire: SEB S.A., 69132 Ecully Cedex (FR)
(72) Inventeur: Delhom, Daniel Henri Denis, 65110 Cauterets (FR); Charles, Patrick Jean Claude, 65290 Louey (FR)
(74) Mandataire: Martin, Didier

(56) Documents cités:
- DE-A- 2 751 310
- FR-A- 2 625 893
- GB-A- 934 024
- US-A- 3 935 805
- US-A- 4 108 053
- US-A- 4 328 740

## Description

La présente invention se rapporte au domaine technique général des machines à boisson chaude dans lesquelles la boisson chaude est obtenue par lixiviation c'est-à-dire par passage d'eau chaude à travers une mouture de granulométrie définie.

La présente invention concerne une machine à boisson chaude, en particulier une machine à café, comportant au moins une sortie d'eau chaude disposée au-dessus d'un porte-filtre, une plaque de répartition de l'eau chaude sur la surface de la mouture contenue dans le porte-filtre, ladite plaque étant pourvue de perforations et située sous la sortie d'eau, ainsi que des moyens de réglage de la répartition d'eau.

Il a déjà été tenté de maîtriser l'arrosage de la mouture de café en vue d'obtenir une extraction optimale des arômes contenus dans ladite mouture. A cet effet, il a déjà été proposé dans la demande FR-A-2625893 d'équiper la goulotte d'arrosage avec un clapet commandé par un dispositif de temporisation. Le clapet peut occuper une première position correspondant au début de fonctionnement du cycle de la machine à café, et induisant, par l'intermédiaire de perforations, un arrosage périphérique de la mouture de café. Dans une seconde étape du cycle de fonctionnement de la machine à café, le clapet occupe une seconde position commandée par le dispositif de temporisation, position dans laquelle la mouture est arrosée dans sa zone centrale. Un tel dispositif aboutit donc en fin de compte, à un arrosage de la mouture qui est variable dans le temps, passant de manière discontinue d'un arrosage périphérique à un arrosage central de la mouture.

Un tel dispositif peut être considéré comme apportant une contribution positive à la tendance générale de maîtrise du phénomène de lixiviation et plus généralement de maîtrise de l'extraction des arômes d'une mouture de café, mais il y a lieu de considérer que ce dispositif de l'art antérieur présente également des inconvénients. Ainsi, sa mise en oeuvre nécessite le montage de pièces supplémentaires telles qu'un clapet et un dispositif de temporisation. Par ailleurs, ce dispositif ne permet pas de tenir compte des variations de granulométrie ou du type de mouture, ce qui au total ne permet pas à l'utilisateur de régler lui-même le goût de la boisson qu'il désire obtenir.

II a également déjà été proposé dans la demande DE-A-2751310 d'améliorer l'extraction des arômes d'une mouture de café en permettant à l'utilisateur de régler lui-même la zone d'impact de l'eau sur la mouture de café. Ce dispositif antérieur comprend une plaque de répartition pourvue d'orifices périphériques et d'un orifice central de diamètre plus important. L'eau s'écoule sur la mouture à travers la plaque de répartition, à partir d'une sortie d'eau chaude disposée au-dessus de la plaque et dans l'axe de l'orifice central. La maîtrise de la répartition d'eau est assurée par un moyen de réglage réalisé sous la forme d'une plaque de déflexion pourvue d'une manette de réglage de position. La plaque de déflexion peut ainsi occuper une position au droit de l'orifice de sortie d'eau chaude, ou une seconde position en dehors de l'axe d'écoulement de l'eau chaude. L'utilisateur peut ainsi régler la répartition de l'eau chaude sur la surface de la mouture en ajustant la position de la plaque de déflexion qui dans sa position au droit de l'orifice de sortie conduit l'eau chaude à arroser la périphérie de la mouture, et dans l'autre position conduit l'eau chaude au contact de la zone centrale de la mouture.

Un dispositif d'arrosage avec une plaque de répartition à secteurs radiaux est décrite dans le documeut GB-A-934024.

Il doit être ainsi considéré que ce dispositif permet à l'utilisateur de régler lui-même dans une certaine mesure la qualité de l'extraction des arômes de la mouture, pour tenir compte par exemple du degré de remplissage ou du type de mouture utilisé. Il doit cependant être reconnu que ce dispositif ne permet qu'un réglage limité du goût de la boisson obtenue puisqu'il n'y a en tout et pour tout que deux positions d'extraction différentes.

L'objet de l'invention vise en conséquence à proposer une nouvelle machine à boisson chaude, en particulier une machine à café, ne présentant pas les inconvénients des dispositifs antérieurs connus, et permettant au consommateur de régler lui-même à l'aide de moyens particulièrement simples, et selon une grande possibilité de variation, la répartition d'eau sur la mouture, pour obtenir une grande variété de type de boissons chaudes.

Un autre objet de l'invention vise à fournir une machine à boisson chaude dont le réglage de l'arrosage en fonction de la boisson désirée, est obtenu à l'aide de moyens particulièrement simples, et de manière reproductible.

Un autre objet de l'invention est de fournir une machine à boisson chaude dans laquelle l'utilisateur dispose d'une grande possibilité de réglage du type de boisson.

Les objets assignés à l'invention sont atteints à l'aide d'une machine à boisson chaude, en particulier machine à café, conforme à la revendication 1.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- la figue 1 montre selon une coupe transversale un détail d'une machine à café conforme à l'invention, pourvue d'une plaque de répartition d'eau conforme à l'invention.
- la figure 2 montre une vue de dessus, prise selon la ligne II-II de la figure 1, une plaque de répartition de l'eau chaude conforme à l'invention.
- la figure 3 montre selon une coupe transversale une seconde variante de réalisation d'une plaque de répartition conforme à l'invention.
- la figure 4 montre selon une vue de dessus prise selon la ligne IV-IV de la figure 3, une seconde variante de l'invention.

Dans la description qui suit, il sera fait référence à une machine à boisson chaude constituée d'une machine à café, étant entendu que l'objet de l'invention s'applique à toutes machines à boisson chaude similaires aptes à assurer la réalisation d'une boisson chaude telle que par exemple du café, du thé.

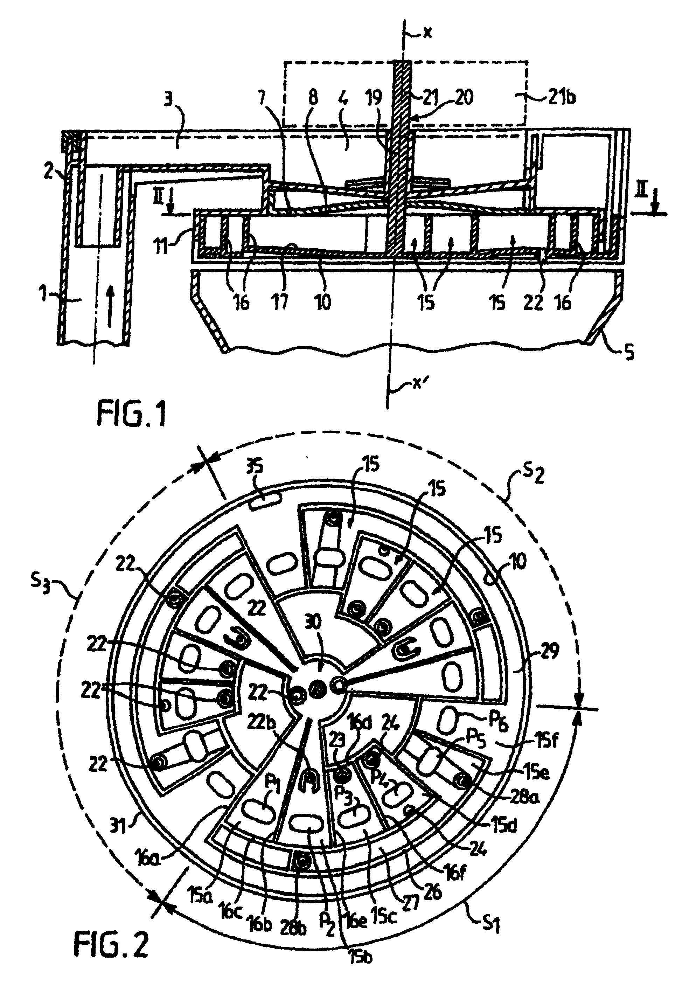

La figure 1 montre un détail de la partie supérieure d'une machine à café (non représentée dans son ensemble) du type à filtre. La machine à café comporte un tube 1 de montée d'eau chaude relié de manière classique à un réservoir et à un moyen de chauffe tel qu'une résistance blindée. Le tube de montée d'eau 1 est relié par sa partie supérieure 2 à un conduit de sortie 3 formant un coude à 90° débouchant dans une chambre de distribution 4 d'eau. Cette dernière définit par exemple un volume de révolution, par exemple cylindrique, d'axe de symétrie x-x'. La machine à café conforme à l'invention comporte également de manière classique un porte-filtre 5, de forme tronconique disposé sous la chambre de distribution 4, à distance de cette dernière et d'axe de symétrie confondu avec l'axe x-x'. Le porte-filtre 5 est de manière classique destiné à contenir une quantité définie de mouture de café. La chambre de distribution 4 définit dans sa partie inférieure une zone tampon destinée à régulariser le débit d'eau chaude provenant du conduit 3. La chambre de distribution 4 est limitée à sa partie inférieure par un fond 7 dans l'épaisseur duquel est ménagé au moins une sortie d'eau chaude 8, par exemple circulaire ou de forme oblongue. Selon une variante préférée de l'invention le fond 7 est pourvu d'une série de trois sorties d'eau chaude 8 décalées angulairement de 120° chacune autour de l'axe x-x'. Le fond 7 s'étend au-dessus et à distance d'une plaque 10 de répartition d'eau, ayant par exemple la forme d'un disque, monté solidaire de la chambre 4 par l'intermédiaire d'un boîtier externe 11 rapporté par tous les moyens appropriés sur le corps de la chambre 4. La plaque 10 et la sortie d'eau 8 sont montées avec une possibilité de mobilité relative, et dans la variante des Figures 1 et 2, la plaque 10 est montée mobile à rotation autour de son axe de symétrie confondu avec l'axe de symétrie x-x'. La plaque 10 s'étend également au-dessus du porte-filtre 5 et est en conséquence interposée directement entre la mouture contenue dans le porte-filtre 5 et la ou les sorties d'eau 8. La plaque 10 comporte une série de secteurs individualisés 15, délimités par une série de parois 16 s'élevant à partir de la face supérieure 17 de la plaque 10. Tel que cela est montré à la figure 1, la plaque 10 est pourvue d'un moyen de réglage 20 de sa position par rapport à la sortie d'eau 8. Ainsi la plaque 10 comporte un arbre de réglage 21 s'étendant selon l'axe x-x' à travers la chambre de répartition 4 et débouchant au-dessus et à l'extérieur de ladite chambre 4. Avantageusement l'arbre de réglage 21 est solidaire par sa partie supérieure d'un bouton de réglage 21b.

De cette façon la plaque 10 peut être commandée par l'utilisateur et mise en rotation autour de l'axe x-x' de façon à ajuster la position de chaque secteur individualisé 15 et sélectionner l'un d'eux pour l'amener au droit de l'une des sorties d'eau 8.

Tel que cela est montré à la figure 2, chaque secteur individualisé 15 comporte au moins une perforation 22 occupant, par rapport à l'axe de symétrie x-x' de la mouture, une position radiale caractéristique du secteur, ladite position étant différente de la position radiale caractéristique de chaque autre secteur 15. Dans l'exemple particulier de réalisation montré à la figure 2 la plaque 10, en forme de disque, comporte trois séries identiques de secteur 15, sensiblement radiaux, décalés de 120° appartenant respectivement à des secteurs notés S1, S2 et S3. Chaque secteur S1, S2 ou S3, et par exemple le secteur S1 comporte un premier secteur radial 15a limité par deux parois radiales 16a, 16b, débouchant par une ouverture vers la zone centrale 30 de la plaque 10 et reliées entre elles à distance de la périphérie 31 de la plaque 10, par une paroi périphérique 16c. Dans l'exemple de réalisation montré à la figure 2 le premier secteur radial 15a est associé à au moins une et de préférence deux perforations 22 ménagées dans la zone centrale 30 au voisinage du centre de la plaque 10. Les perforations 22 de la zone centrale 30 peuvent être circulaires ou oblongues.

Le secteur S1 comporte un deuxième secteur radial 15b, adjacent au premier secteur radial 15a par l'intermédiaire de la paroi radiale 16b commune, de forme identique et relié par une ouverture à la zone centrale 30. Le deuxième secteur radial 15b est pourvu sensiblement dans sa partie centrale, d'une perforation centrale 22b. Le deuxième secteur radial 15b est limité extérieurement à sa périphérie par un prolongement de la paroi périphérique 16c.

La plaque de distribution 10 comporte un troisième secteur radial 15c, complètement fermé et adjacent au second secteur radial. Le troisième secteur radial 15c est délimité extérieurement par une paroi périphérique constituant un prolongement de la paroi périphérique 16c, et intérieurement par une paroi de fond 16d s'étendant sensiblement selon un diamètre du disque, au niveau de la perforation centrale 22b. Le troisième secteur radial 15c est délimité latéralement par une paroi radiale 16e commune au deuxième secteur radial 15b, et par une autre paroi latérale radiale 16f. Le troisième secteur radial 15c comporte une perforation 23 située au même niveau que la perforation centrale 22b c'est-à-dire sur un cercle identique coaxial au centre du disque.

La plaque de distribution 10 comporte un quatrième secteur radial 15d adjacent au troisième secteur 15c, de forme et de dimension identiques. Le quatrième secteur radial 15d comporte deux perforations 24 dont l'une est située sur le même cercle que la perforation 23, et dont l'autre est située au voisinage de la paroi périphérique 16c délimitant la partie supérieure dudit quatrième secteur.

La plaque de distribution 10 comporte un cinquième secteur radial 15e, adjacent au quatrième secteur radial 15d, et se prolongeant radialement extérieurement au-delà de la paroi périphérique 16c par une seconde paroi périphérique 26. Cette dernière est centrée sur le centre du disque et définit avec la paroi périphérique 16c un secteur annulaire 27 longeant les troisième et quatrième secteurs radiaux, respectivement 15c et 15d, pour se terminer au niveau du second secteur radial 15d. Le cinquième secteur radial 15e est de préférence pourvu de deux perforations 28a, 28b, respectivement situées sur un même cercle. Avantageusement la perforation 28b est disposée à l'extrémité du secteur annulaire 27 au niveau du deuxième secteur radial 15b, alors que la perforation 28a est située à l'autre extrémité du secteur annulaire 27.

La plaque de distribution 10 comprend enfin un sixième secteur radial 15f, adjacent au cinquième secteur radial 15e, comportant en outre un secteur périphérique annulaire 29 constituant la périphérie de ladite plaque 10. Le secteur périphérique annulaire 29 est pourvu d'au moins une perforation 35 associée et reliée à une conduite (non représentée aux figures) débouchant hors du porte-filtre pour fournir de l'eau chaude n'ayant pas traversé la mouture.

De manière avantageuse, les perforations 22, 22b, 23, 24, 28a, 28b présentent une surface d'autant plus importante qu'elles sont proches du centre de la plaque de distribution 10. En d'autres termes, les perforations 22 de la zone centrale 30 sont les plus importantes, et par exemple constituées d'orifices circulaires d'un diamètre de l'ordre de 4 mm. Les perforations 22b, 23 et 24, situées en position médiane, sont par exemple circulaires et d'un diamètre de l'ordre de 3 mm, alors que les perforations 28b et 28a ont un diamètre de l'ordre de 1,5 mm. Le débit de l'eau chaude s'écoulant sur la mouture est ainsi réglé de manière simple et décroît radialement du centre vers l'extérieur de la mouture proportionnellement à l'épaisseur de ladite mouture. Il est cependant possible, à titre de variante, d'inverser la position des perforations de grand diamètre en les disposant à la périphérie de la plaque 10, alors que les perforations de plus petit diamètre sont disposées vers le centre de la plaque 10.

Le fonctionnement du dispositif est le suivant.

L'utilisateur par action sur le dispositif de réglage 20 sélectionne tout d'abord la position relative de la ou des sorties d'eau 8 par rapport à au moins un secteur individualisé 15 spécifique en fonction du goût et de la force du café qu'il souhaite obtenir. Selon une première possibilité de réglage montrée à la figure 2 l'utilisateur peut amener le premier secteur radial 15a au droit et sous le ou les orifices de sortie 8. Dans cette première position la sortie d'eau 8 occupe la position notée P1 au-dessus et au droit du premier secteur radial 15a (Figure 2). Dans l'exemple de réalisation préférentiel montré à la figure 2 les trois sorties d'eau 8 sont respectivement au droit et au-dessus de chacun des trois premiers secteurs radiaux 15a décalés de 120°. Dans cette position l'eau chaude arrive dans la chambre de répartition 4 et s'écoule ensuite par chacune des sorties d'eau chaude 8 dans chacun des premiers secteurs radiaux 15a. L'arrosage de la mouture s'effectue donc uniquement par les perforations centrales 22 de diamètre important ce qui provoque un écoulement préférentiel de fort débit à travers la totalité du gâteau de mouture et en particulier à travers sa plus grande épaisseur. Dans la position notée P1 l'utilisateur obtient donc un café de goût fort, par la conjonction du passage de l'eau chaude dans les perforations de surface importante et par arrosage du centre du gâteau de mouture.

L'utilisateur peut également positionner la plaque de répartition 10 pour que les sorties d'eau chaude 8 soient disposées au droit et au-dessus de chacun des deuxièmes secteurs radiaux 15b. Dans cette position, notée P2, l'arrosage s'effectue par les perforations 22b de diamètre intermédiaire et en position médiane, et simultanément par les perforations centrales 22. Dans la position notée P2 l'utilisateur obtient donc un café de goût intermédiaire puisqu'une partie de l'eau chaude a traversé la mouture sur une épaisseur globale inférieure à la position notée P1.

Lorsque l'utilisateur positionne le troisième secteur radial 15c au droit et sous les sorties d'eau chaude 8 il obtient un café d'un goût encore légèrement moins prononcé puisque dans cette dernière position notée P3 l'arrosage n'est plus effectué par les perforations centrales 22 mais par les perforations 23 en position médiane. Dans la position notée P4 l'utilisateur obtient un café de goût encore plus faible puisque globalement l'eau s'écoule dans le gâteau de mouture en traversant une épaisseur de mouture moindre que dans les positions précédentes. Enfin, la position notée P5 correspond à un café de goût faible puisque globalement l'arrosage s'effectue par le biais des orifices 28b et 28a de diamètre réduit et de position radiale la plus excentrée correspondant à l'épaisseur de mouture la plus faible. La position notée P6 correspond à un écoulement de l'eau à travers la perforation 35 reliée à un canal d'évacuation (non représenté aux figures) débouchant hors du porte-filtre 5. Dans cette position l'utilisateur n'obtient donc que de l'eau chaude.

En définitive, les arrosages différenciés de la mouture sont à l'origine de l'obtention de café de goûts différents même si au cours de la réalisation du café, le gâteau de mouture est finalement toujours noyé dans l'eau chaude. Il doit également être noté que le recours à des secteurs radiaux 15 permet de diminuer au maximum le parcours de l'eau chaude dans le labyrinthe, évitant ainsi une déperdition de chaleur.

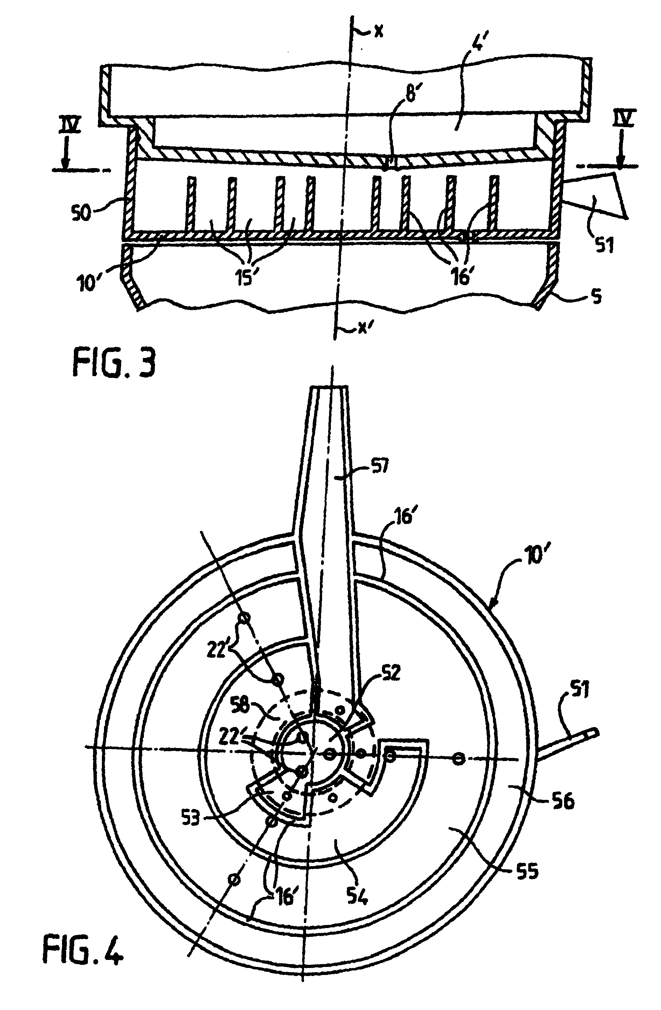

Les figures 3 et 4 montrent une seconde variante de réalisation ne différant essentiellement de la première variante des figures 1 et 2 que par une disposition différente des secteurs individualisés 15. Selon cette seconde variante de réalisation la plaque de distribution 10' est solidaire à sa périphérie d'une paroi circulaire 50 s'élevant à partir de ladite plaque 10'. Cette dernière est montée avec possibilité de rotation autour de l'axe x-x' sous la chambre de distribution 4'. La rotation de la plaque de distribution 10' peut être obtenue par actionnement d'un levier ou d'une manette 51 solidaire de la paroi 50. Les secteurs individualisés 15' sont délimités par une série de parois 16' s'étendant de manière circulaire et de préférence concentriques à l'axe x-x', à partir de la surface supérieure de la plaque de distribution 10'. Cette dernière comporte un secteur central 52 délimité par une paroi 16' sensiblement circulaire à l'exception d'une zone radiale 53 formant une excroissance radiale par rapport au secteur central 52. Ce dernier comporte sensiblement en son centre une série de trois perforations 22'. La plaque de distribution 10' comporte en outre un secteur intermédiaire 54 délimité par une paroi 16' entourant au moins partiellement de manière concentrique le secteur radial 52. Le secteur intermédiaire 54 comprend également une série de trois perforations 22' situées sur un cercle de diamètre supérieur aux perforations 22' du secteur central 52. La plaque de distribution 10' comprend également un secteur extérieur 55 délimité par une paroi 16' circulaire et concentrique aux précédentes, ledit secteur extérieur 55 comportant trois perforations 22' situées sur un cercle de diamètre supérieur aux perforations 22' du secteur intermédiaire 52. La plaque de distribution 10' comporte à sa périphérie une paroi 16' circulaire définissant avec celle du secteur externe 55 un canal périphérique 56. La plaque de distribution 10' comporte en outre un canal radial 57 débutant à partir de la paroi 16' du secteur central 52 et débouchant en dehors de la périphérie de la plaque. Chacun des secteurs définis présente au moins une zone s'étendant dans un secteur annulaire commun 58 montré en ligne pointillé à la figure 4 et correspondant aux zones de projection possible des limites extérieures des sorties d'eau 8'. En particulier la zone radiale 53 formant excroissance est située dans le champ couvert par le secteur annulaire 58.

Cette seconde variante de réalisation fonctionne d'une manière analogue à la variante précédente et nécessite de la part de l'utilisateur un prépositionnement par action sur le levier 51, des secteurs individualisés 52, 54 ou 55 relativement à la sortie d'eau 8'. Lorsque cette dernière est au droit de la zone radiale 53, l'arrosage de la mouture s'effectue donc par les perforations 22' du secteur central 52 ce qui correspond à l'obtention d'un café à goût prononcé. Lorsque par rotation de la plaque de distribution 10' la sortie d'eau 8' est disposée au droit d'une zone du secteur annulaire 58 s'étendant dans le secteur intermédiaire 54 l'arrosage de ce secteur donne un café de goût moyen. Enfin, lorsque la sortie d'eau 8' est au droit d'une zone du secteur annulaire 58 correspondant au secteur extérieur 55, l'arrosage de la mouture a lieu dans une zone périphérique, ce qui donne un café léger. Lorsque la sortie d'eau 8' est située au-dessus du canal radial 57, l'utilisateur obtient uniquement de l'eau chaude. Bien évidemment, il est possible de positionner la sortie d'eau 8' à cheval sur deux secteurs adjacent, pour obtenir un café de goût intermédiaire.

A titre de variante il est bien évidemment possible d'inverser la structure des moyens de réglage et de réaliser une chambre de distribution 4' qui est mobile relativement à la plaque de distribution 10', le réglage consistant alors à ajuster la position de la sortie d'eau 8' au-dessus du ou des secteurs individualisés 15 ou 52, 54, 55 ou 56 sélectionné(s).

Il doit être constaté que l'on obtient ainsi par des moyens simples de réglage une multitude de réglages de la qualité et de la force du café que l'on désire obtenir.

## Revendications

1. Machine à boisson chaude, en particulier machine à café, comportant :
- une chambre de distribution d'eau chaude (4) avec des sorties d'eau chaude (8, 8') ;
- un porte-filtre (5) disposé sous la chambre (4) et destiné à contenir une quantité de mouture ;
- des moyens de réglage de la répartition d'eau sur la surface de mouture comprenant une plaque de répartition d'eau (10, 10') interposée entre la mouture et la ou les sorties d'eau (8, 8'), ladite plaque et ladite chambre étant montées mobiles relativement, la plaque de répartition (10, 10') comportant plusieurs séries de perforations (22, 22') réparties angulairement autour d e l'axe x-x' de la chambre (4) pour arroser la mouture, **caractérisée en ce que** chaque perforation (22, 22') d'une même série est située sur un cercle de diamètre différent des autres séries pour former, avec des parois (16, 16') pour l'écoulement d'eau associés à chaque série de perforations (22, 22'), des secteurs d'arrosages différenciés de la mouture s'étendant sensiblement en direction circulaire, selon la position relative sélectionnée des sorties d'eau (8, 8') au-dessus du secteur sélectionné.

2. Machine selon la revendication 1, **caractérisée en ce que** la chambre (4) est montée mobile en rotation relativement à la plaque de répartition (10, 10').

3. Machine selon la revendication 1 ou la revendication 2 **caractérisée en ce que** les parois (16') s'étendent de manière circulaire, et de préférence concentrique à l'axe x-x' pour former des secteurs sensiblement circulaires.

4. Machine selon l'une des revendications 1 à 3 **caractérisée en ce que** la plaque de répartition (10') comporte au moins un secteur central (52), au moins un secteur intermédiaire (54) et au moins un secteur extérieur (55).

5. Machine selon la revendication 4 **caractérisée en ce que** le secteur central (52) comporte trois perforations (22'), le secteur intermédiaire (54) comporte une série de trois perforations (22') situées sur un cercle de diamètre supérieur aux perforations (22') du secteur central (52), le secteur extérieur (55) comporte trois perforations (22') situées sur un cercle de diamètre supérieur au cercle des perforations du secteur intermédiaire (52).

6. Machine selon l'une des revendications 1 à 5 **caractérisée en ce que** les perforations (22') de chaque série sont alignées radialement avec les perforations (22') des autres séries.

7. Machine selon l'une des revendications 1 à 6 **caractérisée en ce que** les perforations (22') sont circulaires ou oblongues.

8. Machine à boisson chaude selon l'une des revendications 1 à 6 **caractérisée en ce qu'**elle est constituée d'une machine à café.

## Patentansprüche

1. Brühgetränkemaschine, insbesondere Kaffeemaschine, mit:
- einer Heißwasserverteilungskammer (4) mit Heißwasseraustritten (8, 8');
- einem unter der Kammer (4) angeordneten Filterträger (5) zum Aufnehmen eine Mahlgutmenge;
- Mitteln zum Einstellen der Verteilung des Wassers auf der Oberfläche des Mahlguts mit einer Verteilungsplatte (10, 10'), die zwischen dem Mahlgut und dem Wasseraustritt oder den Wasseraustritten (8, 8') eingesetzt ist, wobei die Platte und die Kammer relativbeweglich angebracht sind, die Verteilungsplatte (10, 10') mehrere Reihen von im Winkel um die Achse x-x' der Kammer (4) verteilten Bohrungen (22, 22') zur Berieselung des Mahlguts enthält, **dadurch gekennzeichnet, daß** jede Bohrung (22, 22') einer selben Reihe sich auf einem Kreis befindet, dessen Durchmesser von dem der anderen Reihen verschieden ist, um mit Wänden (16, 16'), die dem Abfließen des Wassers dienen und jeder Reihe von Bohrungen (22, 22') zugeordnet sind, Bereiche zur Berieselung des Mahlguts zu bilden, die sich im wesentlichen kreisförmig erstrecken und je nach der ausgewählten relativen Stellung der Wasseraustritte (8, 8') über dem ausgewählten Bereich differenziert sind.

2. Maschine nach Anspruch 1, **dadurch gekennzeichnet, daß** die Kammer (4) in bezug auf die Verteilungsplatte (10, 10') drehbeweglich angebracht ist.

3. Maschine nach Anspruch 1 oder 2, **dadurch gekennzeichnet, daß** die Wände (16') sich kreisförmig und vorzugsweise zur Achse x-x' konzentrisch erstrecken, um im wesentlichen kreisförmige Bereiche zu bilden.

4. Maschine nach einem der Ansprüche 1 bis 3, **dadurch gekennzeichnet, daß** die Verteilungsplatte (10') mindestens einen zentralen Bereich (52), mindestens einen Zwischenbereich (54) und mindestens einen Außenbereich (55) enthält.

5. Maschine nach Anspruch 4, **dadurch gekennzeichnet, daß** der zentrale Bereich (52) drei Bohrungen (22') enthält, daß der Zwischenbereich (54) eine Reihe von drei Bohrungen (22') enthält, die sich auf einem Kreis befinden, dessen Durchmesser größer ist als bei den Bohrungen (22') des zentralen Bereichs (52), und daß der Außenbereich (55) drei Bohrungen (22') enthält, die sich auf einem Kreis befinden, dessen Durchmesser größer als der Kreis der Bohrungen des Zwischenbereichs (52) ist.

6. Maschine nach einem der Ansprüche 1 bis 5, **dadurch gekennzeichnet, daß** sich die Bohrungen (22') jeder Reihe in radialer Ausrichtung mit den Bohrungen (22') der anderen Reihen befinden.

7. Maschine nach einem der Ansprüche 1 bis 6, **dadurch gekennzeichnet, daß** die Bohrungen (22') kreisförmig oder länglich sind.

8. Brühgetränkemaschine nach einer der Ansprüche 1 bis 6, **dadurch gekennzeichnet, daß** sie eine Kaffeemaschine ist.

## Claims

1. Hot-drinks machine, in particular a coffee machine, comprising:
- a hot-water dispensing chamber (4) with hot-water outlets (8, 8');
- a filter holder (5) disposed under the chamber (4) and intended to contain a quantity of ground coffee;
- means for adjusting the distribution of water on the surface of the ground coffee, comprising a water distribution plate (10, 10') interposed between the ground coffee and the water outlet or outlets (8, 8'), the said plate and the said chamber being mounted so as to be able to move relatively, the distribution plate (10, 10') comprising several series of perforations (22, 22') distributed angularly around the axis x-x' of the chamber (4) in order to spray the ground coffee, **characterised in that** each perforation ( 22, 22') in the same series being situated on a circle with a diameter different from the other series in order to form, with walls (16, 16') for the flow of water associated with each series of perforations (22, 22'), sectors of differentiated spraying of the ground coffee extending substantially in a circular direction, according to the selected relative position of the water outlets (8, 8') above the sector selected.

2. Machine according to Claim 1, **characterised in that** the chamber (4) is mounted so as to be able to move in rotation relative to the distribution plate (10, 10').

3. Machine according to Claim 1 or Claim 2, **characterised in that** the walls (16') extend in a circular fashion, and preferably concentric to the axis x-x' in order to form substantially circular sectors.

4. Machine according to one of Claims 1 to 3, **characterised in that** the distribution plate (10') comprises at least one central sector (52), at least one intermediate sector (54) and at least one outer sector (55).

5. Machine according to Claim 4, **characterised in that** the central sector (52) comprises three perforations (22'), the intermediate sector (54) comprises a series of three perforations (22') situated on a circle with a diameter greater than the perforations (22') of the central sector (52), and the outer sector (55) comprises three perforations (22') situated on a circle with a diameter greater than the circle of the perforations in the intermediate sector (52).

6. Machine according to one of Claims 1 to 5, **characterised in that** the perforations (22') in each series are aligned radially with the perforations (22') in the other series.

7. Machine according to one of Claims 1 to 6, **characterised in that** the perforations (22') are circular or rectangular.

8. Hot-drinks machine according to one of Claims 1 to 6, **characterised in that** it comprises a coffee machine.
